(19) Europäisches Patentamt
European Patent Office
Office européen des brevets

(11) **EP 3 170 692 B1**

(12) **EUROPÄISCHE PATENTSCHRIFT**

(45) Veröffentlichungstag und Bekanntmachung des Hinweises auf die Patenterteilung:
**27.01.2021  Patentblatt 2021/04**

(51) Int Cl.:
**B60L 53/66** *(2019.01)*     **B60M 3/00** *(2006.01)*

(21) Anmeldenummer: **16194497.0**

(22) Anmeldetag: **19.10.2016**

(54) **VERFAHREN UND EINRICHTUNG ZUR ERMITTLUNG WENIGSTENS EINER FAHRZEUGINDIVIDUELLEN ENERGIEMENGE**

METHOD AND DEVICE FOR DETERMINING AT LEAST ONE VEHICLE-SPECIFIC AMOUNT OF ENERGY

PROCÉDÉ ET DISPOSITIF DE DÉTERMINATION D'AU MOINS UNE QUANTITÉ D'ÉNERGIE INDIVIDUELLE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.11.2015  DE 102015222754**

(43) Veröffentlichungstag der Anmeldung:
**24.05.2017  Patentblatt 2017/21**

(73) Patentinhaber: **Siemens Mobility GmbH**
**81739 München (DE)**

(72) Erfinder:
• **Schmid, Otto**
  **91341 Röttenbach (DE)**
• **Greif, Tomas**
  **91341 Röttenbach (DE)**

(56) Entgegenhaltungen:
**DE-A1- 19 654 960        DE-A1-102013 226 415**
**DE-A1-102013 227 085     JP-A- 2008 228 412**
**US-A1- 2010 280 678      US-A1- 2011 307 113**

EP 3 170 692 B1

**Beschreibung**

Die Erfindung betrifft ein Verfahren und eine Einrichtung zur Ermittlung wenigstens einer fahrzeugindividuellen Energiemenge, die eines von mehreren Fahrzeugen über eine Fahrleitung aus einem fahrzeugexternen Energieversorgungsnetz entnommen hat.

In den letzten Jahren ist eine Stärkung eines elektrisch betriebenen Verkehrs, der auch als E-Mobilität bezeichnet wird, zu verzeichnen. Dadurch verändert sich eine bis dahin übliche Mobilitätslandschaft. So ist beispielsweise eine Verstärkung des schienengebundenen Verkehrs ersichtlich, aber auch im nicht schienengebundenen Verkehr gibt es verschiedene Vorhaben, Fahrzeuge elektrisch zu betreiben. Beispielsweise werden elektrisch betriebene Lastwagen, sogenannte E-Trucks, auf einer mit einer Fahrleitung versehenen Strecke betrieben. Dabei werden die E-Trucks kontaktbehaftet über die Fahrleitung mit elektrischer Energie versorgt. In Zukunft sollen immer mehr ausgewählte Strecken elektrifiziert werden und den E-Trucks von verschiedenen Transportunternehmen zur Verfügung gestellt werden.

In der DE 10 2013 226 415 A1 ist ein Verfahren und eine Vorrichtung zur Energieabrechnung von mobilen Endverbrauchern in einem Energieversorgungsnetz beschrieben.

Eine kommerzielle Nutzung eines Energieversorgungsnetzes sowohl im schienengebundenen als auch im nicht schienengebundenen Verkehr macht es nötig, dass die von den Fahrzeugen verbrauchte Energie von dem Betreiber des Energieversorgungsnetzes gegenüber den Fahrzeugbetreibern in Rechnung gestellt wird. Der Betreiber des Energieversorgungsnetzes und die Fahrzeugbetreiber sind oft nämlich unterschiedliche Unternehmen. Zur Abrechnung können beispielsweise geeichte Messsysteme auf den Fahrzeugen eingesetzt werden, die die fahrzeugindividuell verbrauchte Energiemenge ermittelt. Diese fahrzeugseitige Energiemengenermittlung ist allerdings relativ aufwändig und nicht frei von Störungen.

Es ist daher die Aufgabe der vorliegenden Erfindung, ein Verfahren und eine Einrichtung zur Ermittlung einer fahrzeugindividuellen Energiemenge bereitzustellen, das einfach ist und eine Verbesserung gegenüber den bestehenden Systemen bietet.

Die vorliegende Erfindung löst die Aufgabe durch ein Verfahren zur Ermittlung wenigstens einer fahrzeugindividuellen Energiemenge, die ein Fahrzeug aus einem fahrzeugexternen Energieversorgungsnetz entnommen hat, bei dem die Energiemenge durch Messungen auf Seiten des Energieversorgungsnetzes ermittelt wird.

Ferner löst die Erfindung die Aufgabe durch eine Einrichtung zur Ermittlung wenigstens einer fahrzeugindividuellen Energiemenge, die ein Fahrzeug aus einem fahrzeugexternen Energieversorgungsnetz entnommen hat, mit wenigstens einer netzseitig angeordneten Messeinrichtung, die zum Ermitteln einer Energiemenge pro Fahrzeug durch Messungen auf Seiten des Energieversorgungsnetzes ausgebildet ist.

Die erfindungsgemäße Lösung hat den Vorteil, dass die netzseitige Ermittlung der fahrzeugindividuellen Energiemenge zentral ausgebildet werden kann und dadurch weniger aufwändig ist. Weiterhin hat die Erfindung den Vorteil, dass wenn die netzseitige Energiemengenermittlung zusätzlich zu einer fahrzeugseitigen Energiemengenermittlung eingesetzt wird, eine Redundanzprüfung möglich ist, die eine Plausibilität der ermittelten Energiemengen bietet und Fehler bei einer der Ermittlungen aufzeigt.

Der Einfachheit halber wird hier teilweise von Energiemessung gesprochen, wohlwissend, dass dies physikalisch direkt nicht möglich ist. Gemessen wird der Strom zusammen mit einer Spannung woraus sich eine Leistung ergibt und letztlich der Energieverbrauch ableiten und berechnen lässt.

Die Erfindung kann durch vorteilhafte Ausgestaltungen weiterentwickelt werden, die im Folgenden beschrieben sind.

So kann das Fahrstromversorgungsnetz mehrere Netzabschnitte aufweisen und eine in wenigstens einem der Netzabschnitte entnommene Gesamtenergiemenge kann ermittelt werden. Dies hat den Vorteil, dass das gesamte Energieversorgungsnetz in kleinere Teile untergliedert wird, in denen Gesamtenergiemengen ermittelt werden. Diese Energiemengen sind dann leichter einzelnen Fahrzeugen zuzuordnen, um die fahrzeugindividuelle Energiemenge zu bestimmen. Ferner kann ein zwischen den Netzabschnitten bestehender Energiefluss bzw. Stromfluss erfasst und bei der Ermittlung der fahrzeugindividuellen Energiemenge und/oder Gesamtenergiemenge berücksichtigt werden. Die Netzabschnitte sind beispielsweise durch sogenannte Durchverbindungen elektrisch miteinander verbunden. Der über diese Durchverbindung fließende Energiefluss verfälscht die in einem Netzabschnitt ermittelten Energiemengen. Wenn dieser Energiefluss jedoch beispielsweise durch einen Messsensor erfasst wird, kann die Gesamtenergiemenge berechnet werden.

Häufig bewegen sich mehrere Fahrzeuge in dem gleichen Netzabschnitt des Energieversorgungsnetzes. Um trotzdem die fahrzeugindividuellen Energiemengen ermitteln zu können, kann eine Änderung der Gesamtenergiemenge in wenigstens einem der Netzabschnitte beim Einfahren und/oder Ausfahren des Fahrzeugs in oder aus diesem Netzabschnitt ermittelt werden. Beim Ein- oder Ausfahren eines Fahrzeugs aus einem Netzabschnitt gibt es einen messbaren Sprung in der Gesamtenergiemenge, der dem ein- oder ausfahrenden Fahrzeug zugeordnet werden kann. Für diese Zuordnung kann zum Erfassen des Einfahrens und/oder Ausfahrens eine Position des Fahrzeugs relativ zum Netzabschnitt oder ein Zeitpunkt des Einfahrens und/oder Ausfahrens ermittelt werden. So kann beispielsweise eine zeitlich bestimmte Messperiode oder ein absolut positionierter Messbereich bestimmt werden, in denen jeweils ein Sprung in der Gesamtenergiemenge auf das in dem Messbereich befindliche Fahrzeug oder in der Messperiode befindliche Fahrzeug zurückführbar ist.

In einer vorteilhaften Ausgestaltung des erfindungsgemäßen Verfahrens kann die fahrzeugindividuelle Energiemenge auf Seiten jedes Fahrzeugs ermittelt werden und diese fahrzeugseitig ermittelte Energiemenge mit der netzseitig ermittelten Energiemenge verglichen werden. Dies hat den oben bereits beschriebenen Vorteil, dass Unterschiede in den an unterschiedlichen Orten ermittelten Energiemengen schnell festgestellt werden, die beispielsweise einen Fehler in einem der beiden Ermittlungen aufzeigen.

Um die fahrzeugindividuelle Energiemenge noch leichter ermitteln zu können, können mehrere in einem Netzabschnitt fahrende Fahrzeuge unter Einhaltung eines vorbestimmten minimalen Abstandes bewegt werden. So wird es vermieden, dass eine Energiemengenänderung nicht eindeutig einem Fahrzeug zugeordnet werden kann, weil zwei Fahrzeuge schnell hintereinander die Netzabschnittsgrenze überfahren haben.

In einer vorteilhaften Ausgestaltung der erfindungsgemäßen Einrichtung kann die netzseitige Messeinrichtung zur Ermittlung einer Energiemengenänderung in wenigstens einem Netzabschnitt des Energieversorgungsnetzes beim Einfahren und/oder Ausfahren des Fahrzeuges in oder aus diesem Netzabschnitt ausgebildet sein. Dies hat den oben bereits beschriebenen Vorteil, dass auch bei mehreren Fahrzeugen in einem Netzabschnitt eine fahrzeugindividuelle Bestimmung der Energiemenge möglich ist.

Ferner kann das Fahrzeug als ein nicht schienengebundenes Fahrzeug ausgebildet sein. Dies hat den Vorteil, dass insbesondere bei einem straßenseitigen System, beispielsweise dem Einsatz von E-Trucks, die erfindungsgemäßen Vorteile besonders zum Tragen kommen, weil hier sehr viele Fahrzeuge im Einsatz sind, die eine Abrechnung der verbrauchten Energiemenge benötigen.

Im Folgenden wird die Erfindung mit Bezug auf die beigefügten Zeichnungen erläutert.

Es zeigen:

Figur 1     eine schematische Darstellung einer beispielhaften Ausführungsform einer erfindungsgemäßen Einrichtung zur Ermittlung einer fahrzeugindividuellen Energiemenge;

Figur 2     eine schematische Darstellung einer weiteren beispielhaften Ausführungsform der erfindungsgemäßen Einrichtung zur Ermittlung einer fahrzeugindividuellen Energiemenge;

Figur 3     eine schematische Darstellung eines Details der Darstellung aus Figur 2;

Figur 4     eine schematische Darstellung einer weiteren beispielhaften Ausführungsform einer erfindungsgemäßen Einrichtung zur Ermittlung einer fahrzeugindividuellen Energiemenge.

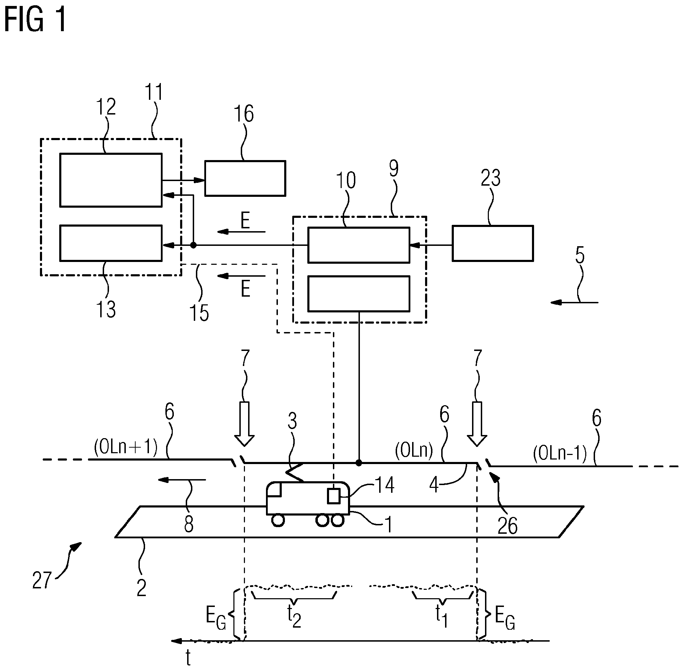

Zunächst wird die Erfindung mit Bezug auf die schematische Darstellung und die beispielhafte Ausführungsform in Figur 1 beschrieben.

Figur 1 zeigt ein Fahrzeug 1, das hier beispielsweise ein E-Truck ist - also ein zumindest teilweise elektrisch betriebener nicht schienengebundener Lastwagen. Alternativ könnte das Fahrzeug aber auch ein schienengebundenes Fahrzeug wie eine Lokomotive sein.

Das Fahrzeug 1 bewegt sich entlang einer Fahrstrecke 2 und weist einen Stromabnehmer 3 auf. Entlang der Fahrstrecke 2 ist eine Oberleitung 4 angeordnet, die Teil eines elektrischen Energieversorgungsnetzes 5 ist. Die Oberleitung 4 umfasst mehrere Oberleitungsabschnitte OL, die hier im Einzelnen als OLn, OLn-1, OLn+1 bezeichnet sind. Die Oberleitungsabschnitte OL können allgemein auch als Netzabschnitte 6 bezeichnet werden. Alternativ zu einer Oberleitung können die Netzabschnitte auch als eine bodenseitige dritte Schiene, als eine Deckenstromschiene oder ähnliches ausgebildet sein.

Der Stromabnehmer 3 des Fahrzeugs 1 kontaktiert die Oberleitung 4 während der Fahrt entlang der Fahrstrecke 2 und wird über diese mit elektrischer Energie versorgt. Die Netzabschnitte 6 bzw. die Oberleitungsabschnitte OL sind an Abschnittsgrenzen 7 in der Ausführungsform in Figur 1 voneinander elektrisch getrennt. Die Abschnittsgrenzen 7 können in Anlehnung an die Bewegung des Fahrzeugs 1 in einer Fahrtrichtung 8 jeweils auch als Abschnittsanfang und Abschnittsende bezeichnet werden.

Innerhalb des Energieversorgungsnetzes 5 ist jeder Netzabschnitt 6 mit einem Unterwerk 9 verbunden, das die elektrische Energie bereitstellt. Das Unterwerk 9 weist unter anderem eine Messeinrichtung 10 auf, die zum Ermitteln einer Energiemenge E auf Seiten des Energieversorgungsnetzes 5 ausgebildet ist. Die Ermittlung der Energiemenge E, die das Fahrzeug 1 aus dem Energieversorgungsnetz 5 entnimmt, wird im Folgenden noch genauer beschrieben. Die Messeinrichtung 10 übermittelt die fahrzeugindividuelle Energiemenge E an eine Recheneinrichtung 11. Die Recheneinrichtung 11 umfasst eine Vergleichseinrichtung 12 und ein zentrales Abrechnungssystem 13, das die fahrzeugindividuelle Energiemenge E in Rechnung stellt.

Das Fahrzeug 1 umfasst ferner eine fahrzeugseitige Messeinrichtung 14, die ebenfalls zum Ermitteln der fahrzeugindividuellen Energiemenge E ausgebildet ist. Die fahrzeugseitige Messeinrichtung 14 übermittelt die Energiemenge E ebenfalls an die Recheneinrichtung 11, beispielsweise per drahtloser Datenübertragung 15.

Die fahrzeugseitig ermittelte Energiemenge E wird von der Vergleichseinrichtung 12 mit der netzseitig ermittelten Energiemenge E verglichen. Falls die Vergleichseinrichtung 12 einen Unterschied zwischen den beiden Energiemengen E feststellt, der einen vorgegebenen Grenzwert überschreitet, wird eine Abweichungsmeldung 16 ausgegeben. Die Abweichungsmeldung 16 kann weitere Maßnahmen nach sich ziehen.

Die erfindungsgemäße Einrichtung 27 zur Ermittlung der Energiemenge E umfasst in der beispielhaften Ausführungsform in Figur 1 die Messeinrichtungen 10, 14 und die Vergleichseinrichtung 12.

Im Folgenden wird die Ermittlung der fahrzeugindividuellen Energiemenge E auf Seiten des Energieversorgungsnetzes 15 erläutert, die das Fahrzeug 1 aus dem Energieversorgungsnetz 5 entnimmt. Bei seiner Fahrt entlang der Fahrstrecke 2 in der Fahrtrichtung 8 kontaktiert der Stromabnehmer 3 des Fahrzeugs 1 hintereinander mehrere Netzabschnitte 6. Bei nur einem Stromabnehmer 3 pro Fahrzeug 1 wird die Energiemenge E also immer einem Netzabschnitt 6 entnommen. Wenn sich, wie in Figur 1 dargestellt, lediglich ein Fahrzeug 1 in einem Netzabschnitt 6 befindet, ermittelt die Messeinrichtung 10 auf Seiten des Energieversorgungsnetzes 5 die vom Fahrzeug 1 verbrauchte Energiemenge E. Die Messeinrichtung 10 umfasst beispielsweise einen entsprechenden Messwandler (nicht dargestellt) mit geeignetem Messbereich, um die im Netzabschnitt 6 verbrauchte Gesamtenergiemenge $E_G$ möglichst genau zu ermitteln. Bei Eintritt des Fahrzeugs 1 in den zur Messeinrichtung 10 gehörenden Netzabschnitt 6 steigt die gemessene Gesamtenergiemenge $E_G$ sprunghaft an, wie in Figur 1 schematisch unterhalb des Fahrzeugs 1 dargestellt. Verlässt das Fahrzeug 1 diesen Netzabschnitt 6, indem der Stromabnehmer 3 keinen Kontakt mit dem gemessenen Netzabschnitt 6 hat, fällt die Energiemenge $E_G$ wieder ab. Wenn sich nur ein Fahrzeug 1 im Netzabschnitt 6 befindet, ist die fahrzeugindividuelle Energiemenge E gleich mit der Gesamtenergiemenge $E_G$.

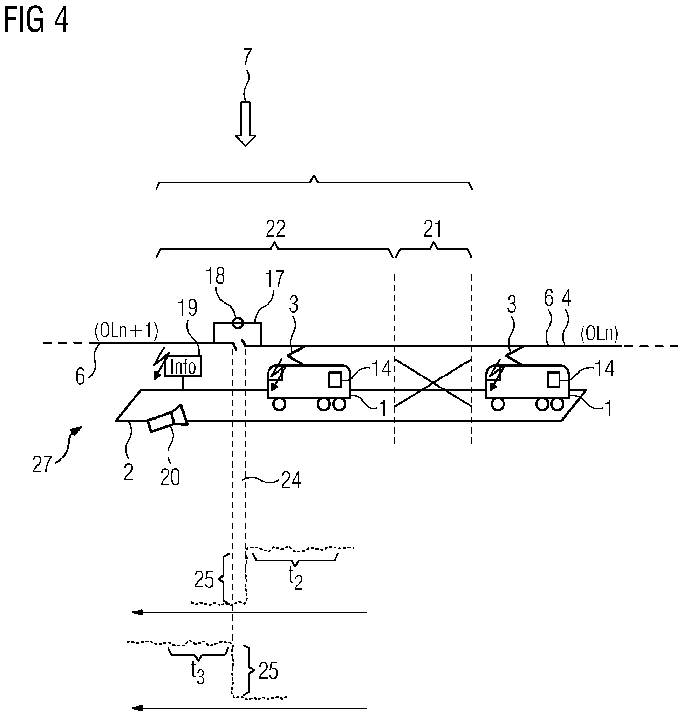

Falls sich gleichzeitig mehrere Fahrzeuge 1 in einem Netzabschnitt 6 befinden, ist die fahrzeugindividuelle Energiemenge E nicht mehr gleich der Gesamtenergiemenge $E_G$. Aber es zeigen sich trotzdem Sprünge in der gemessenen Energiemenge E, wenn ein Fahrzeug 1 über die Abschnittsgrenzen 7 fährt und damit in einen Netzabschnitt 6 einfährt oder ausfährt. Diese Änderung 25 (Figur 4) in der Gesamtenergiemenge $E_G$ kann somit dem einzelnen Fahrzeug 1 zugeordnet werden. Diese Änderung 25 der Gesamtenergiemenge $E_G$ kann durch eine Messung in einer Messperiode t1 bei Einfahrt des Fahrzeugs in den Netzabschnitt 6 und eine Messperiode t2 am Ende bei Ausfahrt des Fahrzeugs 1 aus dem Netzabschnitt 6 ermittelt werden. Aus der Änderung 25 kann die fahrzeugindividuelle Energiemenge E berechnet werden.

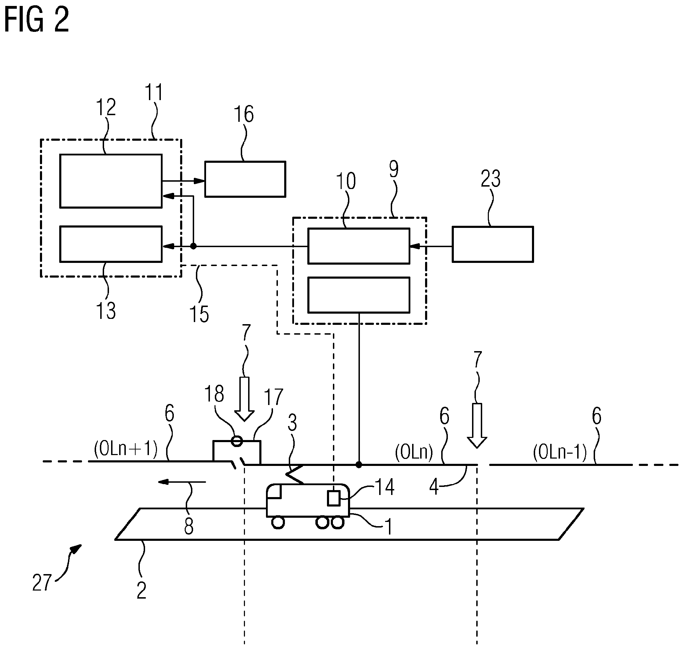

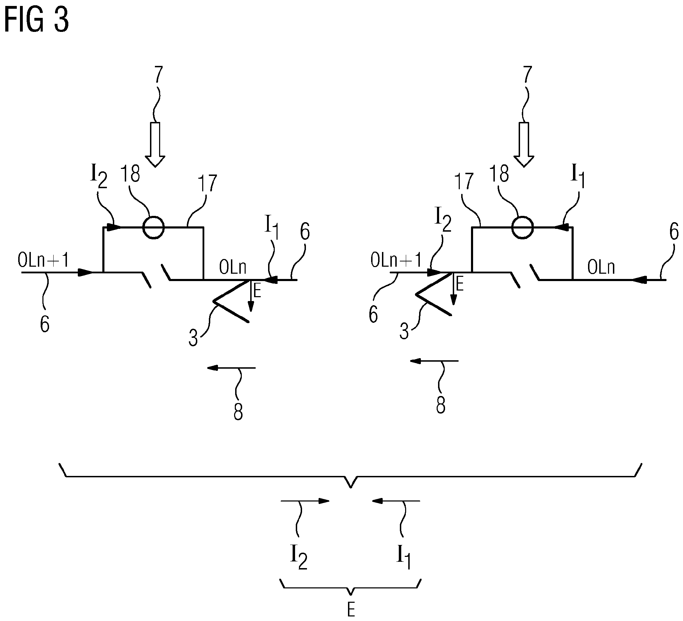

Im Folgenden wird die beispielhafte Ausführungsform in den Figuren 2 und 3 beschrieben. Der Einfachheit halber wird lediglich auf die Unterschiede zu der Ausführungsform in Figur 1 eingegangen.

Anders als in der Ausführungsform in Figur 1 sind die beiden linken Netzabschnitte 6 elektrisch über eine Durchverbindung 17 miteinander verbunden. In der Durchverbindung 17 ist ein Messwandler 18 angeordnet. Mit Hilfe der Durchverbindung 17, die die beiden Netzabschnitte 6 verbindet, ist eine größere Spannungsstabilität in den beiden verbundenen Netzabschnitten 6 sichergestellt. Allerdings wird durch die über Durchverbindung 17 fließende Energie die von der netzwerkseitigen Messeinrichtung 10 gemessene Gesamtenergiemenge $E_G$ verfälscht. Daher ist in der Durchverbindung 17 der Messwandler 18 zur Erfassung dieser fließenden Energie angeordnet. Es wird der Strom gemessen, zusammen mit einer Spannungsmessung (nicht dargestellt) ergeben sich eine Leistung und ein Leistungssprung.

Figur 3 zeigt den Energiefluss über die Durchverbindung 17, wenn ein Fahrzeug 1 mit seinem Stromabnehmer 3 in der Fahrtrichtung 8 fährt und die Abschnittsgrenze 7 passiert. Auf der linken Seite in Figur 3 ist der Zustand dargestellt, wenn der Stromabnehmer 3 des Fahrzeugs 1 in dem einen Netzabschnitt bzw. Oberleitungsabschnitt OLn ist. Die rechte Darstellung zeigt den Zustand, in dem sich das Fahrzeug 1 weiter in der Fahrtrichtung bewegt hat und der Stromabnehmer 3 sich bereits im nächsten Netzabschnitt 6 bzw. im Oberleitungsabschnitt OLn+1 befindet. In der linken Darstellung fließt die Energiemenge E in den Stromabnehmer 3. Diese Energiemenge E setzt sich zusammen aus dem Strom $I_1$ aus dem Oberleitungsabschnitt OLn und dem Strom $I_2$ aus dem Oberleitungsabschnitt OLn+1. Der Strom $I_2$ wird vom Messwandler 18 erfasst, weil er über die Durchverbindung 17 zum Stromabnehmer 3 fließt. Allerdings ist bei der Verrechnung zu beachten, dass mit den Absolutwerten gerechnet wird und diese addiert werden, weil die Ströme $I_1$ und $I_2$ in unterschiedliche Richtungen verlaufen und daher unterschiedliche Vorzeichen haben. Ähnlich verhält es sich in der rechten Darstellung. Hier setzt sich die Energiemenge E erneut aus dem Strom $I_1$ aus dem Oberleitungsabschnitt OLn und dem Strom $I_2$ aus dem Oberleitungsabschnitt OLn+1 zusammen. Diesmal wird der Strom $I_1$ vom Messwandler 18 erfasst, weil dieser über die Durchverbindung 17 in Richtung des mittlerweile im nächsten Oberleitungsabschnitt OLn+1 befindlichen Stromabnehmers 3 fließt.

Im Folgenden wird die beispielhafte Ausführungsform in Figur 4 erläutert. Der Einfachheit halber wird erneut lediglich auf die Unterschiede zu der Ausführungsform in Figur 2 und 3 eingegangen.

Das Energieversorgungsnetz 5 und die Recheneinrichtung 11 sind bei der Ausführungsform in Figur 4 identisch mit denen in den Figuren 1 und 2. Der Einfachheit halber wurden diese in Figur 4 nicht dargestellt. In Figur 4 befinden sich zwei Fahrzeuge 1 im gleichen Netzabschnitt 6. Die Ausführungsform in Figur 4 umfasst eine Kommunikationseinrichtung 19. Mit der Kommunikationseinrichtung 19, die hier beispielhaft als eine Anzeigetafel dargestellt ist, ist eine Kommunikation mit dem Fahrer oder Triebfahrzeugführer des Fahrzeugs 1 und damit eine Beeinflussung des Fahrzeugs 1 möglich. Die Kommunikationseinrichtung 19 kann alternativ auch direkt im Fahrzeug angeordnet sein, beispielsweise in Form eines Mobiltelefons, Tablets, Handhelds oder ähnlichem. So kann dem Fahrer eine Anweisung gegeben werden, damit er beispielsweise an den Abschnittsgrenzen 7 langsamer fährt oder Abstand hält, um die Ermittlung der fahrzeugindividuellen Energiemenge E zu vereinfachen.

Ferner umfasst die Ausführungsform in Figur 4 ein streckenseitig angeordnetes Erfassungsmittel 20, beispielsweise eine Kamera. Das Erfassungsmittel ermittelt die Identität des Fahrzeugs 1, das sich in einem Messbereich 22 um die Abschnittsgrenze 7 herum befindet, beispielsweise anhand eines Kennzeichens. So kann eine gemessene Energieänderung 25 noch besser dem Fahrzeug 1, das ihn verursacht hat, zugewiesen werden.

Um die gemessenen Änderung 25 der Energiemenge E möglichst gut dem individuellen Fahrzeug 1 zuschreiben zu können, ist in der Ausführungsform in Figur 4 zwischen den beiden Fahrzeugen 1 ein minimaler Abstand 21 eingehalten. Durch den minimalen Abstand 21 ist sichergestellt, dass die Änderung 25 beim Überfahren der Abschnittsgrenzen 7 durch ein Fahrzeug 1 registriert werden kann und genau einem der Fahrzeuge 1 zugeschrieben werden kann.

Bei der Ausführungsform in der Figur 4 ist der Messbereich 22 ausgebildet. Wenn sich ein Fahrzeug 1 in diesem Messbereich 22 befindet, werden Änderungen 25 in der verbrauchten Gesamtenergiemenge $E_G$ besonders registriert und diesem Fahrzeug 1 zugeschrieben. Das Vorhandensein eines Fahrzeugs 1 in dem Messbereich 22 kann auf unterschiedlich bekannte Weisen ermittelt werden, beispielsweise über Lichtschranken, Gleisstromkreise oder eine GPS-Positionsermittlung.

Da in Figur 4 mehrere Fahrzeuge 1 den gleichen Netzabschnitt 6 befahren, können nur die Energieänderungen 25, die durch das Einfahren bzw. Ausfahren der Fahrzeuge in den Netzabschnitt 6 verursacht werden, für die Ermittlung der fahrzeugindividuellen Energiemengen E herangezogen werden. Die Zuordnung erfolgt, wie oben bereits beschrieben, über die Positionsermittlung jedes Fahrzeugs oder die bereits beschriebene Kennzeichenerkennung durch das Erfassungsmittel 20.

Zusätzlich können Änderungen von Betriebszuständen der Fahrzeuge 1 Energieänderungen verursachen. Daher wird der Betriebszustand 23 der Fahrzeuge 1 in den beispielhaften Ausführungsformen der Messeinrichtung 10 gemeldet und entsprechend berücksichtigt. Ferner ist durch eine Vielzahl von Messungen, deren Kombination und Analysen eine Plausibilisierung des Messergebnisses möglich.

Entlang der Fahrstrecke 2 können besonders ungünstige Abschnitte bzw. Positionen existieren, die für das erfindungsgemäße Verfahren zur Ermittlung der Energiemenge E ungünstig sind, wie beispielsweise Steigungen, Beschleunigungsstrecken etc. Daher können solche Positionen entlang der Fahrstrecke 2 aus der Messung ausgeschlossen werden. Bei der Planung der Fahrstrecke 2 und der Oberleitung 4 können auch Messbereiche 22, in denen optimale Bedingungen für die Ermittlung der fahrzeugindividuellen Energiemenge E bestehen, ausgebildet und eingeplant werden.

Aus der ermittelten fahrzeugindividuellen Energiemenge E können auch weitere Schlussfolgerungen gezogen werden. Beispielsweise können aus der Energiemenge E Rückschlüsse auf die Masse der Fahrzeuge 1 beispielsweise gemäß der Formel $E = \dfrac{m \cdot v^2}{2}$ oder $P= m*g*dh/dt$ gezogen werden. Die nötigen Geschwindigkeitswerte können beispielsweise über die Positionsänderungen ermittelt werden.

In den bisher beschriebenen Ausführungsformen sind die Netzabschnitte 6 beispielsweise durch mindestens einen Streckentrenner 26 voneinander getrennt.

Alternativ zu den in den Durchverbindungen 17 eingesetzten Messwandlern 18 kann auf diese Messwandler 18 auch verzichtet werden. Die Ermittlung der Energiemenge E wird dann ausschließlich durch die Messwandler (nicht dargestellt) in den Unterwerken 9 berechnet. Hierbei wären die Netzabschnitte 6 nicht hart getrennt, sondern in einem Übergangsbereich 24 (Figur 4) überlappend, so dass Energie aus beiden angrenzenden Netzabschnitten 6 gezogen wird. Daher handelt es sich bei den empfangenden Signalen um verschliffene Signale, die aber mit einem erhöhten Analyseaufwand ebenfalls ausgewertet werden können.

## Patentansprüche

1. Verfahren zur Ermittlung wenigstens einer Energiemenge (E), eines individuellen Fahrzeugs die eines von mehreren Fahrzeugen (1) über eine Fahrleitung aus einem fahrzeugexternen Energieversorgungsnetz (5) entnommen hat,
**dadurch gekennzeichnet, dass**
die Energiemenge (E) durch Messungen auf Seiten des Energieversorgungsnetzes (5) ermittelt wird.

2. Verfahren nach Anspruch 1,
**dadur chgekennzeichnet,** dass
das Energieversorgungsnetz (5) mehrere Netzabschnitte (6) aufweist und eine in wenigstens einem der Netzabschnitte (6) entnommene Gesamtenergiemenge ($E_G$) ermittelt wird.

3. Verfahren nach Anspruch 2,
**dadurch gekennzeichnet, dass**
ein zwischen den Netzabschnitten (6) bestehender Energiefluss ($I_1$, $I_2$) erfasst und bei der Ermittlung der fahrzeugindividuellen Energiemenge (E) und/oder Gesamtenergiemenge ($E_G$) berücksichtigt wird.

4. Verfahren nach Anspruch 2 oder 3,
**dadurch gekennzeichnet, dass**
eine Änderung der Gesamtenergiemenge ($E_G$) in wenigstens einem der Netzabschnitte (6) beim Einfahren und/oder Ausfahren des Fahrzeugs (1) in oder aus diesem Netzabschnitt (6) ermittelt wird.

**5.** Verfahren nach Anspruch 4,
**dadurch gekennzeichnet, dass**
zum Erfassen des Einfahrens und/oder Ausfahrens eine Position des Fahrzeugs (1) oder ein Zeitpunkt oder Zeitraum ($t_1$, $t_2$, $t_3$) des Einfahrens und/oder Ausfahrens ermittelt werden.

**6.** Verfahren nach einem der oben genannten Ansprüche,
**dadurch gekennzeichnet, dass**
die fahrzeugindividuelle Energiemenge (E) auf Seiten jedes Fahrzeugs (1) ermittelt wird und die fahrzeugseitig ermittelte Energiemenge (E) mit der netzseitig ermittelten Energiemenge (E) verglichen wird.

**7.** Verfahren nach einem der oben genannten Ansprüche,
**dadurch gekennzeichnet, dass**
mehrere in einem Netzabschnitt (6) fahrende Fahrzeuge (1) unter Einhaltung eines vorbestimmten minimalen Abstandes (21) bewegt werden.

**8.** Verfahren nach einem der oben genannten Ansprüche 2 bis 7,
**dadurch gekennzeichnet, dass**
eine Änderung (25) in der Gesamtenergiemenge ($E_G$) ermittelt und aus der Änderung (25) die fahrzeugindividuelle Energiemenge (E) berechnet wird.

**9.** Einrichtung (27) zur Ermittlung wenigstens einer Energiemenge (E), eines individuellen Fahrzeugs die eines von mehreren Fahrzeugen (1) über eine Fahrleitung aus einem fahrzeugexternen Energieversorgungsnetz (5) entnommen hat,
**gekennzeichnet durch**
wenigstens eine netzseitig angeordnete Messeinrichtung (10), die zum Ermitteln einer Energiemenge (E) pro Fahrzeug (1) durch Messungen auf Seiten des Energieversorgungsnetzes ausgebildet ist.

**10.** Einrichtung nach Anspruch 9,
**gekennzeichnet durch**
wenigstens eine fahrzeugseitig angeordnete Messeinrichtung (14), die zum Ermitteln der fahrzeugindividuellen Energiemenge (E) ausgebildet ist, und durch wenigstens eine Vergleichseinrichtung (12), die zum Vergleichen einer fahrzeugseitig ermittelten Energiemenge (E) mit der netzseitig ermittelten Energiemenge (E) ausgebildet ist.

**11.** Einrichtung nach Anspruch 9 oder 10,
**dadurch gekennzeichnet, dass** die netzseitige Messeinrichtung (10) zur Ermittlung einer Energiemengenänderung (25) in wenigstens einem Netzabschnitt (6) des Energieversorgungsnetzes (5) beim Einfahren und/oder Ausfahren des Fahrzeugs (1) in oder aus diesem Netzabschnitt ausgebildet ist.

**Claims**

**1.** Method for determining at least one amount of energy (E) of an individual vehicle, which one of several vehicles (1) has taken from a power supply network (5) outside of the vehicle by way of a contact wire,
**characterised in that**
the amount of energy (E) is determined by measurements on the power supply network (5) side.

**2.** Method according to claim 1,
**characterised in that**
the power supply network (5) has a number of network sections (6) and an overall amount of energy ($E_G$) taken in at least one of the network sections (6) is determined.

**3.** Method according to claim 2,
**characterised in that**
an energy flow ($I_1$, $I_2$) which exists between the network sections (6) is detected and taken into consideration when the vehicle-specific amount of energy (E) and/or overall amount of energy ($E_G$) is determined.

**4.** Method according to claim 2 or 3,
**characterised in that**
a change in the overall amount of energy ($E_G$) in at least one of the network sections (6) is determined when the vehicle (1) is moved in or out of this network section (6).

**5.** Method according to claim 4,
**characterised in that**
in order to detect the moving-in and/or moving-out a position of the vehicle (1) or a point in time or period of time ($t_1$, $t_2$, $t_3$) of moving-in and/or moving-out is determined.

**6.** Method according to one of the afore-cited claims,
**characterised in that**
the vehicle-specific amount of energy (E) is determined on each vehicle (1) side and the amount of energy (E) determined on the vehicle side is compared with the amount of energy (E) determined on the network side.

**7.** Method according to one of the afore-cited claims,
**characterised in that**
a number of vehicles (1) travelling in a network section (6) is moved by observing a predetermined minimal distance (21).

8. Method according to one of the afore-cited claims 2 to 7,
   **characterised in that**
   a change (25) in the overall amount of energy ($E_G$) is determined and the vehicle-specific amount of energy (E) is calculated from the change (25).

9. Device (27) for determining at least one amount of energy (E) of a specific vehicle which one of a number of vehicles (1) has taken from a power supply network (5) outside of a vehicle by way of a contact wire,
   **characterised by**
   at least one measuring device (10) arranged on the network side, which is embodied to determine an amount of energy (E) per vehicle (1) by measurements on the power supply network side.

10. Device according to claim 9,
    **characterised by**
    at least one measuring device (14) arranged on the vehicle side, which is embodied to determine the vehicle-specific amount of energy (E) and by at least one comparison device (12), which is embodied to compare an amount of energy (E) determined on the vehicle side with the amount of energy (E) determined on the network side.

11. Device according to claim 9 or 10,
    **characterised in that**
    the network-side measuring device (10) is embodied to determine a change in the amount of energy (25) in at least one network section (6) of the power supply network (5) when the vehicle (1) is moved in and/or out of this network section.

## Revendications

1. Procédé de détermination d'au moins une quantité (E) d'énergie d'un véhicule individuel, que l'un de plusieurs véhicules (1) a prélevé par une ligne de contact d'un réseau (5) d'alimentation en énergie extérieur au véhicule,
   **caractérisé en ce que**
   l'on détermine la quantité (E) d'énergie par des mesures du côté du réseau (5) d'alimentation en énergie.

2. Procédé suivant la revendication 1,
   **caractérisé en ce que**
   le réseau (5) d'alimentation en énergie a plusieurs tronçons (6) de réseau et on détermine une quantité ($E_G$) d'énergie totale prélevée dans au moins l'un des tronçons (6) du réseau.

3. Procédé suivant la revendication 2,
   **caractérisé en ce que**

l'on détecte un flux ($I_1$, $I_2$) d'énergie constitué entre les tronçons (6) du réseau et on en tient compte dans la détermination de la quantité (E) d'énergie individuelle à un véhicule et/ou de la quantité ($E_G$) d'énergie totale.

4. Procédé suivant la revendication 2 ou 3,
   **caractérisé en ce que**
   l'on détermine une variation de la quantité ($E_G$) d'énergie totale dans au moins l'un des tronçons (6) du réseau, lors de l'entrée et/ou de la sortie du véhicule (1) dans ou hors de ce tronçon (6) du réseau.

5. Procédé suivant la revendication 4,
   **caractérisé en ce que**,
   pour détecter l'entrée et/ou la sortie, on détermine une position du véhicule (1) ou un instant ou un laps de temps ($t_1$, $t_2$, $t_3$) de l'entrée et/ou de la sortie.

6. Procédé suivant l'une des revendications précédentes,
   **caractérisé en ce que**
   l'on détermine la quantité (E) d'énergie individuelle à un véhicule du côté de chaque véhicule (1) et on compare la quantité (E) d'énergie déterminée du côté d'un véhicule à la quantité (E) d'énergie déterminée du côté du réseau.

7. Procédé suivant l'une des revendications précédentes,
   **caractérisé en ce que**
   l'on déplace plusieurs véhicules (1) roulant sur un tronçon (6) du réseau, en maintenant une distance (21) minimum déterminée à l'avance.

8. Procédé suivant l'une des revendications 2 à 7 précédentes,
   **caractérisé en ce que**
   l'on détermine une variation (25) de la quantité ($E_G$) d'énergie totale et, à partir de cette variation (25), on calcule la quantité (E) d'énergie individuelle à un véhicule.

9. Dispositif (27) de détermination d'au moins une quantité (E) d'énergie d'un véhicule individuel, que l'un de plusieurs véhicules (1) a prélevée par une ligne de contact d'un réseau (5) d'alimentation en énergie extérieur au véhicule,
   **caractérisé par**
   au moins un dispositif (10) de mesure, qui est disposé du côté du réseau et qui est constitué pour déterminer une quantité (E) d'énergie par véhicule (1) par des mesures du côté du réseau d'alimentation en énergie.

10. Dispositif suivant la revendication 9,
    **caractérisé par**
    au moins un dispositif (14) de mesure, qui est disposé du côté du véhicule et qui est constitué pour déterminer la quantité (E) d'énergie individuelle au véhicule, et par au moins un dispositif (12) de comparaison, qui est constitué pour comparer une quantité (E) d'énergie déterminée du côté du véhicule à la quantité (E) d'énergie déterminée du côté du réseau.

11. Dispositif suivant la revendication 9 ou 10, **caractérisé en ce que**
le dispositif (10) de mesure du côté du réseau est constitué pour la détermination d'une variation (25) de la quantité d'énergie dans au moins un tronçon (6) du réseau (5) d'alimentation en énergie, lorsque le véhicule (1) entre dans ce tronçon du réseau et/ou en sort.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013226415 A1